# EUROPEAN PATENT SPECIFICATION

(11) **EP 4 066 609 B1**
(45) Date of publication and mention of the grant of the patent: **17.06.2026**
(21) Application number: 20893599.9
(22) Date of filing: 30.09.2020
(51) Int. Cl.: G05D 1/00

(54) **AREA REGISTRATION SYSTEM**
FLÄCHENREGISTRIERUNGSSYSTEM
SYSTÈME DE RÉFÉRENCEMENT DE ZONE

(30) Priority: 26.11.2019 JP 2019213245
(43) Date of publication of application: 05.10.2022
(73) Proprietor: Yanmar Power Technology Co., Ltd., Osaka-shi Osaka 530-0013 (JP)
(72) Inventor: TAKAHASHI, Mamoru, Osaka-shi, Osaka 530-8311 (JP)
(74) Representative: Novagraaf International SA
(86) International application number: PCT/JP2020/037056
(87) International publication number: WO 2021/106361

(56) References cited:
- DE-A1- 102014 102 036
- JP-A- 2009 245 003
- JP-A- 2017 161 987
- JP-A- 2017 161 987
- JP-A- 2018 033 344
- JP-A- 2019 097 454
- JP-A- 2019 133 701
- JP-A- 2019 175 261
- US-A1- 2017 181 383

## Description

### TECHNICAL FIELD

The present invention chiefly relates to an area registration system that causes a working vehicle to travel along the perimeter of a specified area, so as to register the contour of the area.

### BACKGROUND ART

A known working vehicle is provided with an antenna for receiving a positioning signal from a positioning system and is capable of acquiring position information of its own based on the signal received by the antenna. It is stated in Patent Literature 1 that a working vehicle provided with a GPS device is caused to travel along the perimeter of an area as a work target so as to register a contour of the area. JP2019133701A relates to a travel region shape registration system. JP2017161987A relates to a technique for registering a shape of a field. US20170181383A1 relates to a pruning robot system based on RFID, GPS and WIFI positioning.

### CITATION LIST

### Patent Literature

Patent Literature 1: JP 2004-354117 A

### DISCLOSURE OF INVENTION

### PROBLEMS TO BE SOLVED BY THE INVENTION

If a temporary obstacle hampering the travel of the working vehicle (mud or another working vehicle, for instance) is present on the perimeter of the area to be registered, the working vehicle has to detour around the obstacle in order to continue traveling. As a result, the area is registered based on a track of traveling continued by detouring around the obstacle.

The present invention has been made in view of the circumstances as above and is chiefly aimed at providing an area registration system capable of registering an accurate contour of the area to be registered even if an obstacle is present on the perimeter of the area.

### MEANS FOR SOLVING THE PROBLEMS

### EFFECT OF THE INVENTION

The problem to be solved by the present invention is as described above, and means for solving the problem and effects of the means are described below.

According to a first aspect of the present invention, an area registration system having the following configuration is provided. To be specific: The area registration system causes a working vehicle to travel along a perimeter of an area and registers a contour of the area. The area registration system includes a position information acquisition unit, an avoidance travel setting unit, and an area registration unit. The position information acquisition unit acquires a position of the working vehicle. The avoidance travel setting unit sets, during travel of the working vehicle, start and finish of an avoidance travel for detouring around an obstacle during travel of the working vehicle along the perimeter of the area. The area registration unit registers the contour of the area based on positions of the working vehicle acquired by the position information acquisition unit during the travel of the working vehicle along the perimeter of the area and specified by excluding positions of the working vehicle acquired during a period from the start to the finish of the avoidance travel.

Such configuration makes it possible to register an accurate contour of the area even if an obstacle is present on the perimeter of the area and the working vehicle is caused to travel avoiding the obstacle. Since it can be settled during a perimetric travel that the avoidance travel is in progress, it is possible to omit or simplify selection of unnecessary positions after the finish of traveling.

The above area registration system preferably has the undermentioned configuration. In other words, the area registration unit registers not only the contour of the area but also traveling track points of the working vehicle. The area registration unit registers travel interpolation points interpolating the traveling track points on a line segment joining a position at the start and a position at the finish of the avoidance travel.

Such configuration makes it possible to create the traveling track points (travel interpolation points) in a place where the avoidance travel was made, as in other places, so that a process using a traveling track is able to be performed.

In the above area registration system, it is preferable that the area registration unit creates at least two straight lines based on the traveling track points and the travel interpolation points and registers an intersection of the two straight lines as a corner of the area.

Such configuration makes it possible to use the travel interpolation points to appropriately find a corner of the area.

According to a second aspect of the present invention, an area registration system having the following configuration is provided. To be specific: The area registration system causes a working vehicle to travel along a perimeter of an area and registers a contour of the area. The area registration system includes a position information acquisition unit, an avoidance travel setting unit, and an area registration unit. The position information acquisition unit acquires a position of the working vehicle. The avoidance travel setting unit sets positions of the working vehicle during an avoidance travel for detouring around an obstacle among positions of the working vehicle acquired by the position information acquisition unit, based on an instruction from an operator after travel of the working vehicle along the perimeter of the area. The area registration unit registers the contour of the area based on positions of the working vehicle acquired by the position information acquisition unit during the travel of the working vehicle along the perimeter of the area and specified by excluding positions of the working vehicle acquired during a period from the start to the finish of the avoidance travel.

Such configuration makes it possible to register an accurate contour of the area even if an obstacle is present on the perimeter of the area and is avoided. The positions during the avoidance travel are set after the perimetric travel, so that the operator is able to concentrate on the driving of the working vehicle during the perimetric travel.

The above area registration system preferably has the undermentioned configuration. In other words, the area registration system includes a determination unit and a notification unit. The determination unit determines whether a traveling track of the working vehicle obtained from the travel of the working vehicle along the perimeter of the area is rectilinear or curvilinear. The notification unit gives notification that a curved line is included in the traveling track, if such occasion arises.

If the avoidance travel is made, the traveling track is often curvilinear. Consequently, the notification that a curved line is included in the traveling track prevents the operator from forgetting to set the avoidance travel.

### BRIEF DESCRIPTION OF DRAWINGS

FIG. 1 is a side view illustrating a general structure of a tractor used in an area registration system according to an embodiment of the present invention.
FIG. 2 is a plan view of the tractor.
FIG. 3 is a block diagram illustrating a main configuration of an autonomous travel system including the area registration system.
FIG. 4 is a diagram illustrating a process for registering a farm field by travel along a perimeter of the farm field, and a problem arising if an obstacle is present on the perimeter of the farm field.
FIG. 5 is a flowchart of a first mode of registering a contour of the farm field.
FIG. 6 is a diagram illustrating a display device of a wireless communications terminal in cases where a position of the tractor is stored for farm field registration and where the position is not stored.
FIG. 7 is a diagram illustrating an actual traveling track, traveling track points, and travel interpolation points.
FIG. 8 is a diagram illustrating a corner specifying method, the contour of the farm field, and the like.
FIG. 9 is a flowchart of a second mode of registering the contour of the farm field.
FIG. 10 is a diagram illustrating the display device of the wireless communications terminal before and after selection of traveling track points not used for the farm field registration.

### DESCRIPTION OF EMBODIMENTS

Next, an autonomous travel system as an embodiment of the present invention is described. The autonomous travel system causes one or more working vehicles to travel autonomously and conduct the whole or a part of a work in a farm field (traveling area). In the description on the present embodiment, a tractor is employed as an exemplary working vehicle, while examples of the working vehicle include, besides the tractor, sulky working machines such as a rice seedling transplanting machine, a combine, a working apparatus for civil engineering or construction, and a snowplow, and walking type working machines as well. In the present specification, autonomous travel means that the configuration related to traveling, which the tractor is possessed of, is controlled by a controller (ECU) provided on the tractor so as to autonomously implement at least steerage in order to follow a route specified in advance. Besides the steerage, vehicle speed control or a work by a working machine may autonomously be implemented. In the autonomous travel, autonomous travel when a person is on the tractor and autonomous travel when no person is on the tractor are incorporated.

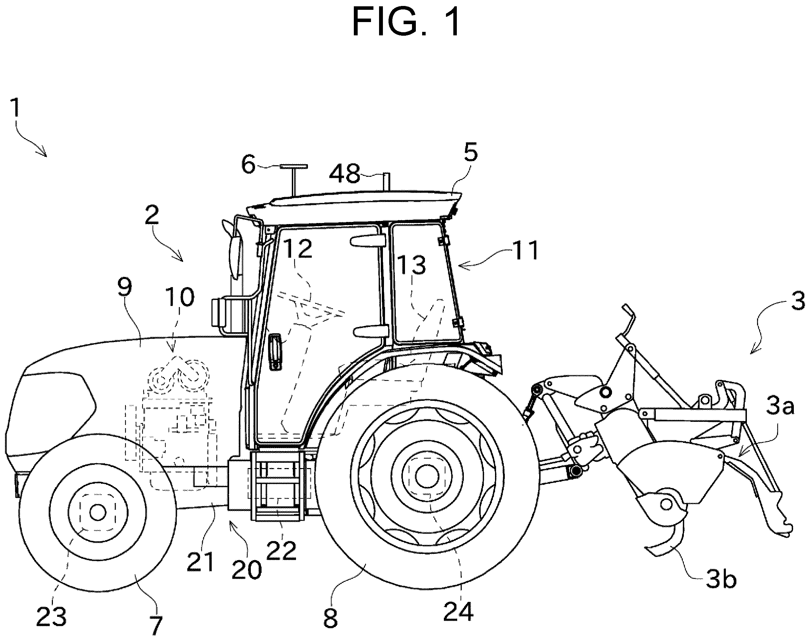

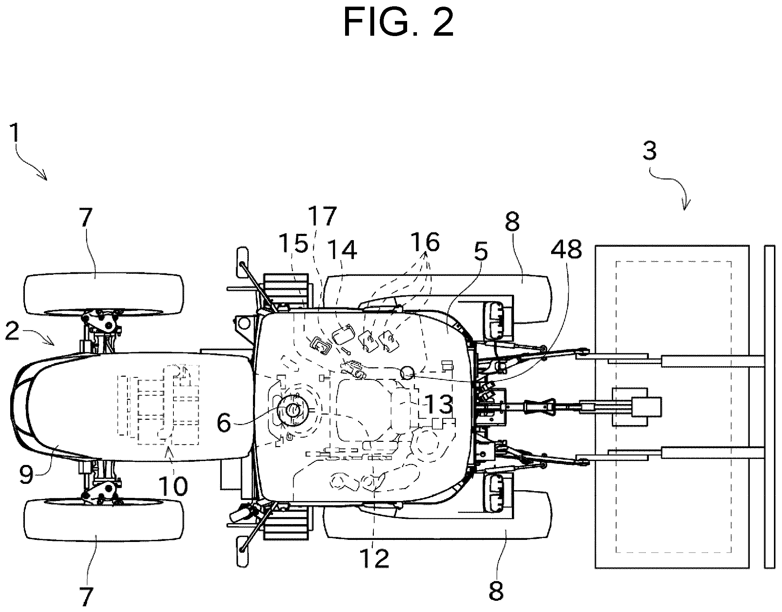

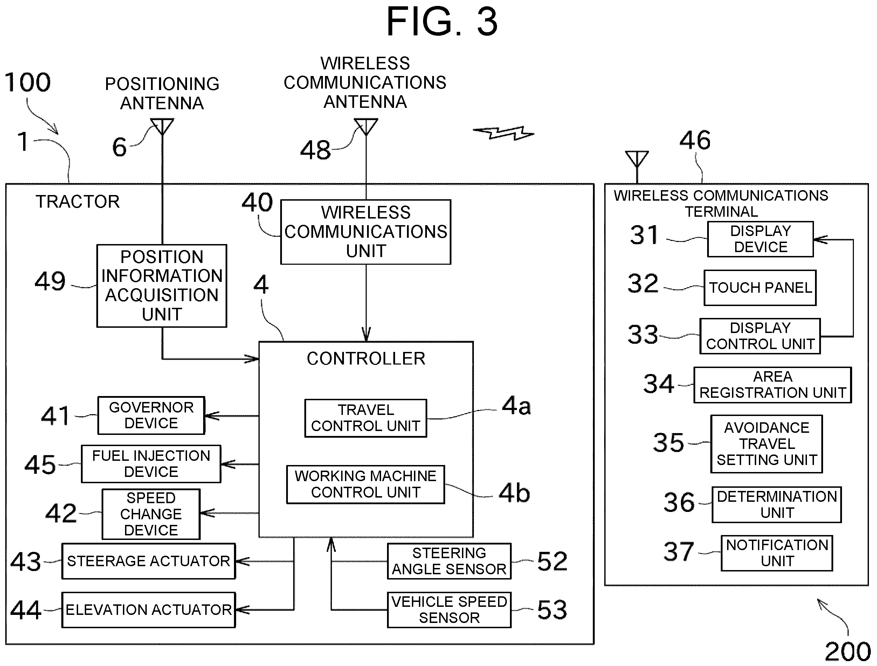

Referring to FIGS. 1 through 3, an autonomous travel system 100 is specifically described. FIG. 1 is a side view illustrating a general structure of a tractor 1. FIG. 2 is a plan view of the tractor 1. FIG. 3 is a block diagram illustrating a main configuration of the autonomous travel system 100, which includes an area registration system 200.

The tractor 1 illustrated in FIG. 1 is used in the autonomous travel system 100 and operated through a wireless communication with a wireless communications terminal 46. The tractor 1 includes a traveling machine body (vehicle body part) 2 capable of autonomously traveling in a farm field. On the traveling machine body 2, a working machine 3 for conducting a farm work, for instance, is removably fitted.

The working machine 3 is exemplified by various working machines, such as a tiller, a plow, a fertilizer applicator, a grass mower, and a seeder, and the working machine 3 selected from among such working machines is fitted on the traveling machine body 2. In an example illustrated in FIGS. 1 and 2, the working machine 3 as fitted is a tiller. Inside a cover 3a of the tiller, a tilling claw 3b is arranged, and the tilling claw 3b rotates on a vehicle width direction as a center of rotation so as to till a farm field.

Referring to FIGS. 1 and 2, the structure of the tractor 1 is described in more detail. As illustrated in FIG. 1, of the traveling machine body 2 of the tractor 1, a front portion is supported by a pair of front wheels 7 and 7 on the right and left and a rear portion is supported by a pair of rear wheels 8 and 8 on the right and left.

In the front portion of the traveling machine body 2, a hood 9 is arranged. Inside the hood 9, an engine 10 as a driving source for the tractor 1 and a fuel tank (not illustrated) are housed. The engine 10 can be constituted of a diesel engine as a nonlimitative example and may also be constituted of a gasoline engine. In addition to or instead of the engine, an electric motor may be used as a driving source.

In rear of the hood 9, a cabin 11 that a user is to get into is arranged. In the cabin 11, a steering handle (steerage tool) 12 for the steerage by the user, a seat 13 that the user can take, and various operation tools for different operations are chiefly provided. The working vehicle such as the tractor 1 may include the cabin 11 or may not include the cabin 11.

Examples of the above operation tools include a monitoring device 14, a throttle lever 15, a plurality of hydraulic operation levers 16, and a main shift lever 17, all illustrated in FIG. 2. Such operation devices are arranged in the vicinity of the seat 13 or the steering handle 12.

The monitoring device 14 is capable of displaying various types of information about the tractor 1. The throttle lever 15 is an operation tool for setting the rotation speed of the engine 10. The hydraulic operation levers 16 are operation tools for making a changeover of hydraulic external takeout valves not illustrated. The main shift lever 17 is an operation tool for continuously changing the traveling speed of the tractor 1.

As illustrated in FIG. 1, a chassis 20 of the tractor 1 is provided in a lower portion of the traveling machine body 2. The chassis 20 is constituted of a machine body frame 21, a transmission 22, a front axle 23, a rear axle 24, and the like.

The machine body frame 21 is a support member in a front portion of the tractor 1 and supports the engine 10 directly or through a vibration-proof member or the like. The transmission 22 changes power from the engine 10 and transmits the changed power to the front axle 23 and the rear axle 24. The front axle 23 is so formed as to transmit the power input from the transmission 22 to the front wheels 7. The rear axle 24 is so formed as to transmit the power input from the transmission 22 to the rear wheels 8.

As illustrated in FIG. 3, the tractor 1 is provided with a controller 4. The controller 4 is formed as a known computer and includes an arithmetic unit such as a CPU, a storage device such as a non-volatile memory, and an input and output part, none of which is illustrated. In the storage device, various programs, data related to the control of the tractor 1, and the like are stored. The arithmetic unit is capable of reading various programs from the storage device and executing the programs. The cooperation between the hardware as above and software allows the controller 4 to serve as a travel control unit 4a and a working machine control unit 4b. The travel control unit 4a controls the travel (forward movement, backward movement, stoppage, turning, and the like) of the traveling machine body 2. The working machine control unit 4b controls movements (upward and downward movements, driven motion, stoppage, and the like) of the working machine 3. The controller 4 can implement other control than the above. The controller 4 may be constituted of a single computer or a plurality of computers.

The travel control unit 4a implements vehicle speed control to control the vehicle speed of the tractor 1 and steerage control to steer the tractor 1. In the case of the vehicle speed control, the controller 4 controls either or both of the rotation speed of the engine 10 and the gear ratio of the transmission 22.

Specifically, the engine 10 is provided with a governor device 41 including an actuator not illustrated that changes the rotation speed of the engine 10. The travel control unit 4a is able to control the rotation speed of the engine 10 by controlling the governor device 41. On the engine 10, moreover, a fuel injection device 45 that adjusts the injection timing and the injection amount of the fuel to be injected (fed) into a combustion chamber of the engine 10 is mounted. The travel control unit 4a is able to stop the feed of fuel to the engine 10 and stop the driving of the engine 10, for instance, by controlling the fuel injection device 45.

On the transmission 22, a speed change device 42 that is a movable swash plate-type hydraulic, continuously variable transmission, for instance, is provided. The travel control unit 4a changes the angle of a swash plate of the speed change device 42 using an actuator not illustrated, so as to change the gear ratio of the transmission 22. By performing such process, the vehicle speed of the tractor 1 is changed to a target vehicle speed.

The travel control unit 4a acquires a position of the tractor 1 from a position information acquisition unit 49 and implements the steerage control so that the tractor 1 may travel along a route specified in advance. Specifically, a steerage actuator 43 is provided in a midway portion of a rotation shaft (steering shaft) of the steering handle 12. The travel control unit 4a calculates an appropriate rotation angle of the steering handle 12 so that the tractor 1 may travel along the route, then drives the steerage actuator 43 so that the calculated rotation angle may be achieved, so as to control the rotation angle of the steering handle 12.

The working machine control unit 4b changes the working machine 3 from a state of being driven to a state of being stopped and vice versa based on whether a work conduct condition is met. The working machine control unit 4b also controls the upward and downward movements of the working machine 3. Specifically, the tractor 1 is provided with an elevation actuator 44 constituted of a hydraulic cylinder or the like in the vicinity of a three-point link mechanism coupling the working machine 3 to the traveling machine body 2. The working machine control unit 4b drives the elevation actuator 44 so as to cause the working machine 3 to move upward or downward as appropriate, which allows a work to be conducted by the working machine 3 at a desired level.

The tractor 1, which is provided with the controller 4 as described above, is capable of controlling the traveling machine body 2 and the working machine 3 with the controller 4 and conducting an autonomous work while autonomously traveling in a farm field without the user getting into the cabin 11 and performing various operations.

Next, a configuration for acquiring information required for the autonomous travel is described. Specifically, the tractor 1 in the present embodiment is provided with a positioning antenna 6, a wireless communications antenna 48, a vehicle speed sensor 53, a steering angle sensor 52, and the like as illustrated in FIG. 3 and so forth. In addition, the tractor 1 is provided with an inertial measurement unit (IMU) capable of specifying the attitude (roll angle, pitch angle, and yaw angle) of the traveling machine body 2.

The positioning antenna 6 receives a signal from a positioning satellite constituting a positioning system such as a satellite positioning system (GNSS). As illustrated in FIG. 1, the positioning antenna 6 is attached to an upper face of a roof 5 of the cabin 11 of the tractor 1. A positioning signal received by the positioning antenna 6 is input to the position information acquisition unit 49 as a position detection unit illustrated in FIG. 3. The position information acquisition unit 49 calculates and acquires position information on the traveling machine body 2 (strictly speaking, the positioning antenna 6) of the tractor 1 as latitude and longitude information, for instance. The position information as acquired by the position information acquisition unit 49 is input to the controller 4 and used for the autonomous travel.

In the present embodiment, a high-accuracy satellite positioning system employing a GNSS-RTK method is used, to which the present invention is not limited, and any other positioning system may be used as long as position coordinates are obtained with high accuracy. For instance, the use of a differential positioning system (DGPS) or a stationary satellite-type satellite navigation augmentation system (SBAS) is thinkable.

The wireless communications antenna 48 receives a signal from the wireless communications terminal 46 operated by the user and transmits a signal to the wireless communications terminal 46. As illustrated in FIG. 1, the wireless communications antenna 48 is attached to the upper face of the roof 5 of the cabin 11 of the tractor 1. A signal received by the wireless communications antenna 48 from the wireless communications terminal 46 is subjected to signal processing in a wireless communications unit 40 illustrated in FIG. 3 and then input to the controller 4. A signal to be transmitted from the controller 4 or the like to the wireless communications terminal 46 is subjected to signal processing in the wireless communications unit 40 and subsequently transmitted by the wireless communications antenna 48 and received by the wireless communications terminal 46.

The vehicle speed sensor 53 detects the vehicle speed of the tractor 1 and is provided on an axle between the front wheels 7 and 7, for instance. Data on a detection result obtained with the vehicle speed sensor 53 are output to the controller 4. The vehicle speed of the tractor 1 may not be detected by the vehicle speed sensor 53 but calculated from the time as spent by the tractor 1 in traveling a specified distance, on the basis of the positioning antenna 6. The steering angle sensor 52 is a sensor for detecting the steering angle of the front wheels 7 and 7. In the present embodiment, the steering angle sensor 52 is provided on a kingpin not illustrated that is provided on the front wheels 7 and 7. Data on a detection result obtained with the steering angle sensor 52 are output to the controller 4. The steering angle sensor 52 may be provided on the steering shaft.

As illustrated in FIG. 3, the wireless communications terminal 46 includes a display device 31 and a touch panel 32. The wireless communications terminal 46 is a tablet terminal and may also be a smartphone or a notebook PC. If the tractor 1 is caused to autonomously travel in the state, where the user has got on the tractor 1, the same function that the wireless communications terminal 46 has may be imparted to a device on the tractor 1 (the controller 4, for instance). The user is able to refer to and check information (information from the vehicle speed sensor 53, for instance) displayed on the display device 31 of the wireless communications terminal 46. The user is also able to operate the touch panel 32, a hardware key not illustrated or the like so as to transmit a control signal for controlling the tractor 1 to the controller 4 of the tractor 1.

The wireless communications terminal 46 includes an arithmetic unit such as a CPU, a storage device such as a non-volatile memory, and an input and output part, none of which is illustrated. In the storage device, various programs, data related to the route, and the like are stored. The arithmetic unit is capable of reading various programs from the storage device and executing the programs. The cooperation between the hardware as above and software allows the wireless communications terminal 46 to serve as a display control unit 33, an area registration unit 34, an avoidance travel setting unit 35, a determination unit 36, and a notification unit 37.

The display control unit 33 creates display data to be displayed on the display device 31 and appropriately controls display contents. For instance, the display control unit 33 displays a specified monitoring screen, instruction screen or the like on the display device 31 while the tractor 1 is caused to autonomously travel along the route.

Next, registration of a contour of a farm field is described. Registration of the contour of a farm field is carried out by the area registration system 200. The area registration system 200 is constituted of devices and parts for registering the contour of a farm field (the position information acquisition unit 49 and the area registration unit 34, for instance).

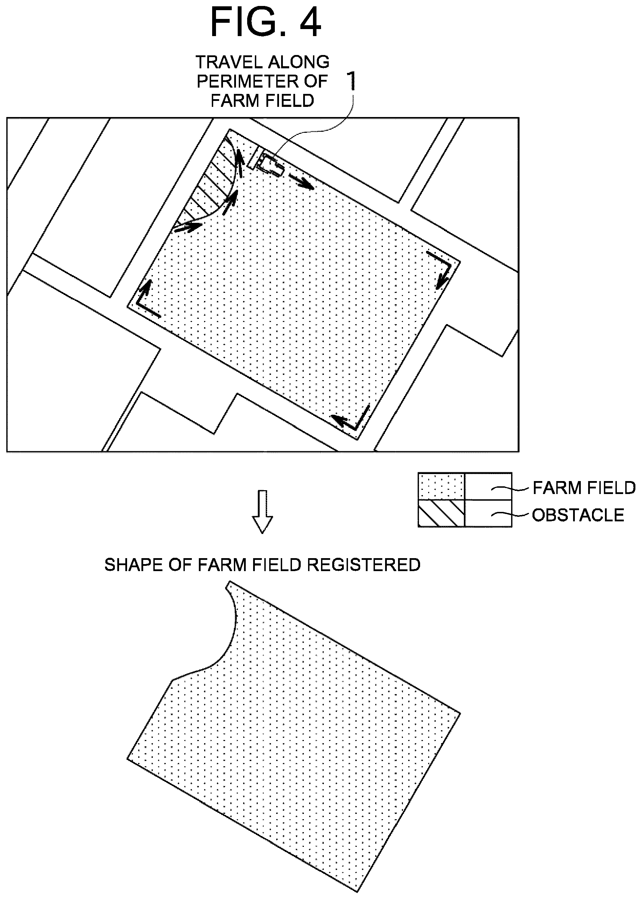

First of all, a summarized method for registering a farm field and a conventional problem are explained with reference to FIG. 4. An operator operates the wireless communications terminal 46 so as to follow a mode of registering a farm field. The operator then causes the tractor 1 to travel along a perimeter of a farm field. After the finish of a perimetric travel, the wireless communications terminal 46 connects positions of the tractor 1 acquired by the position information acquisition unit 49 during the perimetric travel and makes an appropriate adjustment so as to prepare, and store (register) in a storage, the contour of the farm field (namely, latitude and altitude information about a periphery of the farm field).

In the farm field, an obstacle hampering the travel of the tractor 1 (making the travel unsuitable) may be present. If the obstacle is easy to remove (that is to say, is an object having come flying, rubbish or the like of relatively light weight), the perimetric travel is continued by removing the obstacle. An obstacle unremovable over a long period of time (such as a tree and a building) prevents a work from being conducted on the place, where the obstacle is present, so that traveling is adequately carried out by keeping away from the obstacle. If, however, a temporary obstacle not easy to remove (mud or another tractor) is present, traveling has to be continued by avoiding the obstacle, as illustrated in FIG. 4. If traveling is continued by avoiding the obstacle, an area is generated that is indeed a farm field but is not registered as a farm field. In the case of a temporary obstacle, in particular, a work may also be conducted on the place, where the obstacle was present, so that it is preferable to register such place as a farm field. In that case, the farm field needs to be reregistered afterword, which causes the operator a lot of time and effort.

In the present embodiment, it is possible to use not positions of the tractor 1 during avoidance travel but positions of the tractor 1 acquired with other timing to prepare and register the contour of the farm field. The present embodiment has a first mode for settling in real time during the travel of the tractor 1 whether the avoidance travel is in progress and a second mode for selecting, after the finish of the travel along the perimeter of the farm field, positions acquired during the avoidance travel. The area registration system 200 follows either the first mode or the second mode based on an instruction from the operator. The area registration system 200 may be so formed as to only follow the first mode or the second mode.

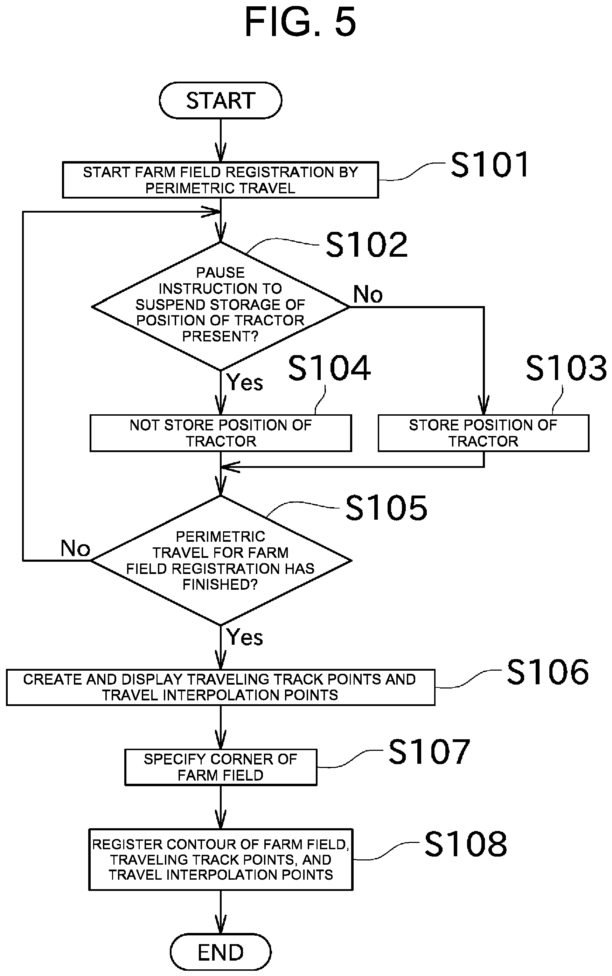

The first mode is initially described with reference to FIGS. 5 through 8. If an instruction to register a farm field is received from the operator and a condition for starting farm field registration is met, the area registration unit 34 starts farm field registration by a perimetric travel of the tractor 1 (step S101). Subsequently, the operator causes the tractor 1 to travel along the perimeter of the farm field.

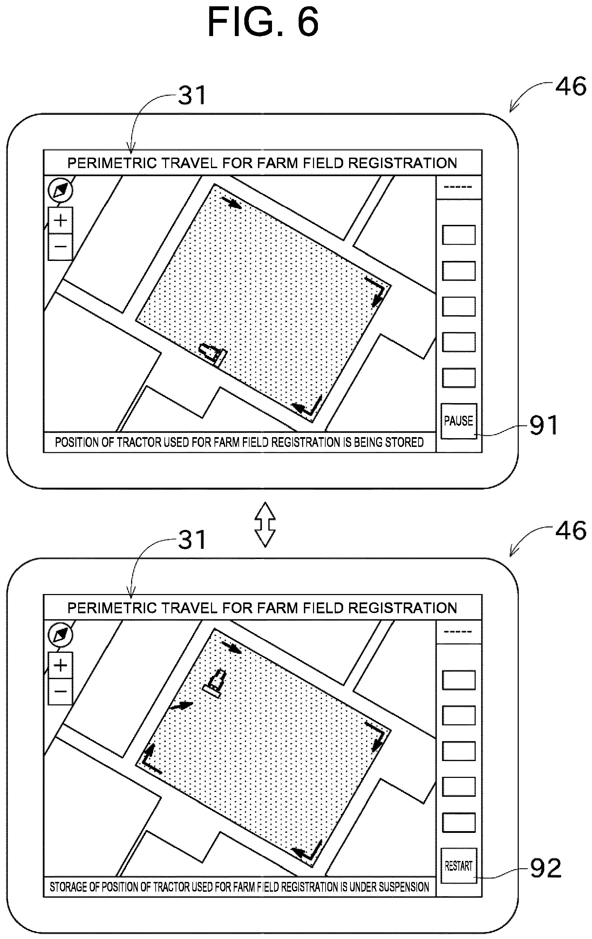

During the travel of the tractor 1, a pause button 91 is displayed on the display device 31 of the wireless communications terminal 46, as illustrated in FIG. 6. The pause button 91 is a button on the touch panel and may be a hardware key. The pause button 91 is a button for settling whether to store a position of the tractor 1 as a position for preparing the contour of the farm field. The operator operates the pause button 91 with timing of traveling in a position separated from the perimeter of the farm field (timing of starting the avoidance travel) in order to avoid an obstacle, for instance.

As a result, the avoidance travel setting unit 35 settles that the avoidance travel has started (that is to say, the avoidance travel is in progress). The position of the tractor 1 is not stored while it is settled that the avoidance travel is in progress. During a pause, a restart button 92 is displayed instead of the pause button 91 and a cautionary message meaning that storage of the position of the tractor 1 is under suspension is further displayed on the wireless communications terminal 46, as illustrated in a lower portion of FIG. 6. Instead of or in addition to the display of the cautionary message, a cautionary sound may be used to give a caution. If the operator operates the restart button 92, the avoidance travel setting unit 35 settles that the avoidance travel has finished (that is to say, cancels settling that the avoidance travel is in progress). Consequently, the storage of the position of the tractor 1 is restarted.

Such process is illustrated in steps S102 through S104 in the flowchart. In other words, the area registration unit 34 determines whether a pause instruction to suspend the storage of the position of the tractor 1 is present (step S102). The determination depends on a setting situation of the avoidance travel setting unit 35. If the pause instruction is not present, the position of the tractor 1 is stored (step S103), and the position of the tractor 1 is not stored if the pause instruction is present (step S104).

Then, the area registration unit 34 determines whether a perimetric travel for farm field registration has finished (step S105). This determination is based on whether a specified operation to be performed by the operator at the finish of the perimetric travel has been performed. The process in steps S102 through S104 is repeatedly performed until the perimetric travel finishes. Thus, positions of the tractor 1, which is not making the avoidance travel (that is to say, is traveling along the perimeter of the farm field), are stored.

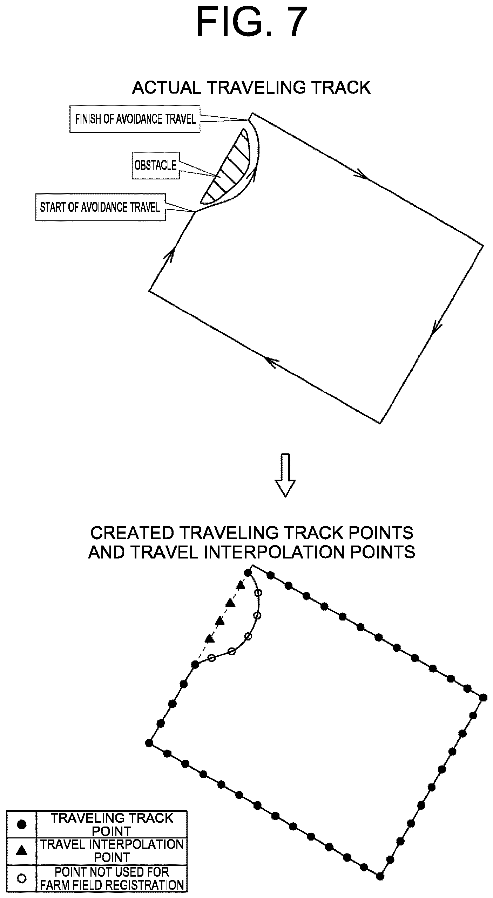

Next, the area registration unit 34 performs a process for registering the farm field, based on the positions of the tractor 1, which are acquired as described above. Initially, the area registration unit 34 creates traveling track points and travel interpolation points and the display control unit 33 displays the traveling track points and the travel interpolation points on the display device 31 of the wireless communications terminal 46, or the like (step S106). The traveling track points and the travel interpolation points are described below with reference to FIG. 7.

The traveling track points are points each indicating a position of the tractor 1 acquired during the perimetric travel for the farm field registration. Such points exist in great numbers and are accordingly extracted at regular time intervals or regular distance intervals (or stored at regular time intervals during the perimetric travel). The position of the tractor 1 is not stored during the avoidance travel, so that no traveling track points are created during the avoidance travel, as illustrated in a lower portion of FIG. 7.

The travel interpolation points achieve interpolation in a place where no traveling track points are created. To be specific: In the place, where the obstacle is present, the tractor 1 does not actually travel and, accordingly, no traveling track points are created. The traveling track points, however, are required for other processes, as will be described later. For this reason, the area registration unit 34 creates the travel interpolation points by the following method. Initially, the area registration unit 34 connects a traveling track point acquired at the start (at a time in a range including times immediately before and immediately after the start) of the avoidance travel and a traveling track point acquired at the finish (at a time in a range including times immediately before and immediately after the finish) of the avoidance travel to each other with a straight line (see a broken line in the lower portion of FIG. 7). Then, the area registration unit 34 arranges the travel interpolation points on the straight line at regular distance intervals. The display control unit 33 performs a process for displaying the traveling track points and the travel interpolation points on the display device 31 of the wireless communications terminal 46. The display control unit 33 may perform a process for displaying the traveling track points and travel interpolation points as superimposed on cartographic data or the like.

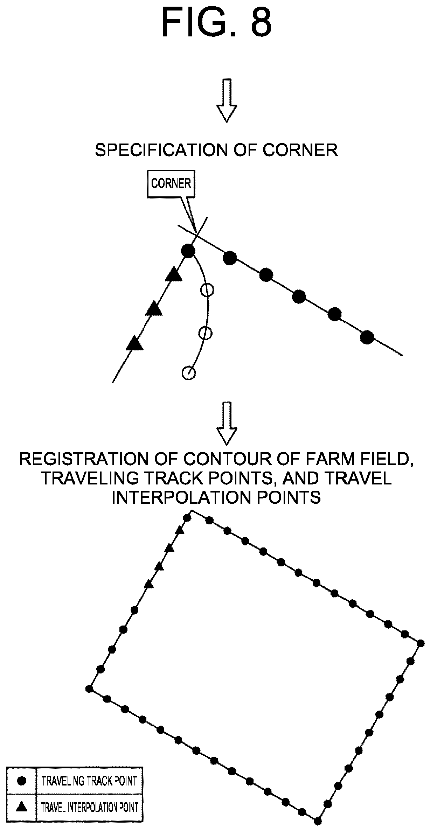

Next, the area registration unit 34 specifies a corner of the farm field (step S107). Referring to FIG. 8, a process for specifying a corner of the farm field is described below. The tractor 1 cannot turn rectangularly, and turns in an arc, for instance, inside a corner of the farm field. Therefore, the area registration unit 34 specifies the corner of the farm field based on the traveling track points and the travel interpolation points. The area registration unit 34 initially creates a straight line passing through traveling track points and travel interpolation points in the vicinity of the corner of the farm field. Since the tractor 1 does not necessarily make a strictly straight movement, the straight line may be so created (using an approximation method such as the least-squares method) as to pass through positions as close as possible to a plurality of traveling track points and travel interpolation points. The area registration unit 34 specifies an intersection of two straight lines created in the vicinity of the corner of the farm field as the corner of the farm field. Thus, the travel interpolation points are used to specify the corner of the farm field.

Next, the area registration unit 34 stores (registers) the contour of the farm field, the traveling track points, and the travel interpolation points in the storage (step S108). The contour of the farm field is prepared based on corners of the farm field specified as described above, the traveling track points, and the travel interpolation points. For instance, a plurality of line segments are so created as to pass through the corners of the farm field and to pass through positions as close as possible to the traveling track points and the travel interpolation points and the line segments are combined with one another so as to prepare the contour of the farm field. Since a position acquired by the area registration unit 34 is strictly a position of the positioning antenna 6, the contour of the farm field may be prepared from positions that are displaced from the acquired positions in a direction to the outside of the perimeter. If the positioning antenna 6 is arranged in a center in the vehicle width direction of the tractor 1, the amount of displacement is adequately set to be half of a vehicle width of the tractor 1, for instance. In this way, registration of the farm field is completed. Afterward, a working region for creating a route for autonomous travel, a headland region, and the like are prepared in the registered farm field. The traveling track points and the travel interpolation points are also used during the preparation of the working region and the headland region. The processes performed by the area registration system 200 of the present embodiment during the registration of the farm field may also be performed during the registration of the working region.

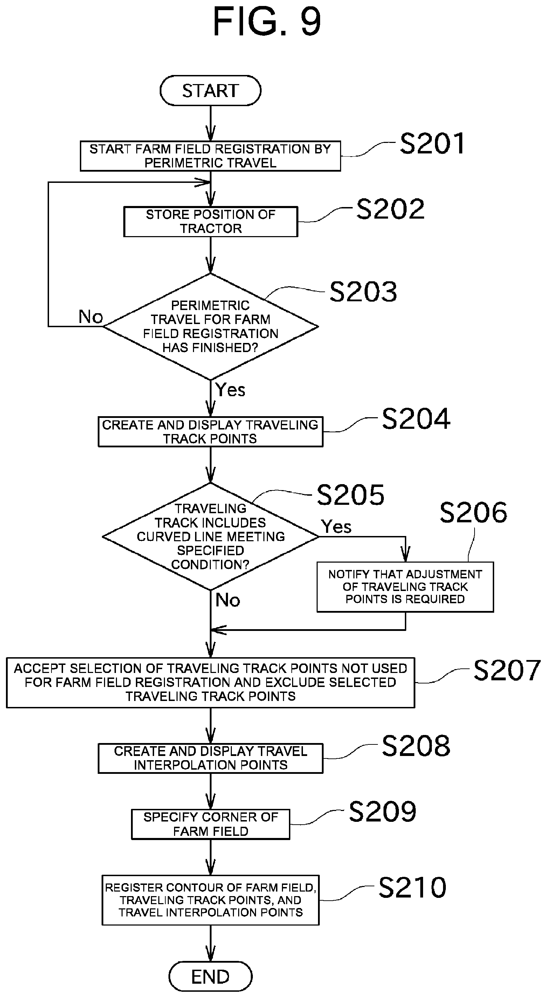

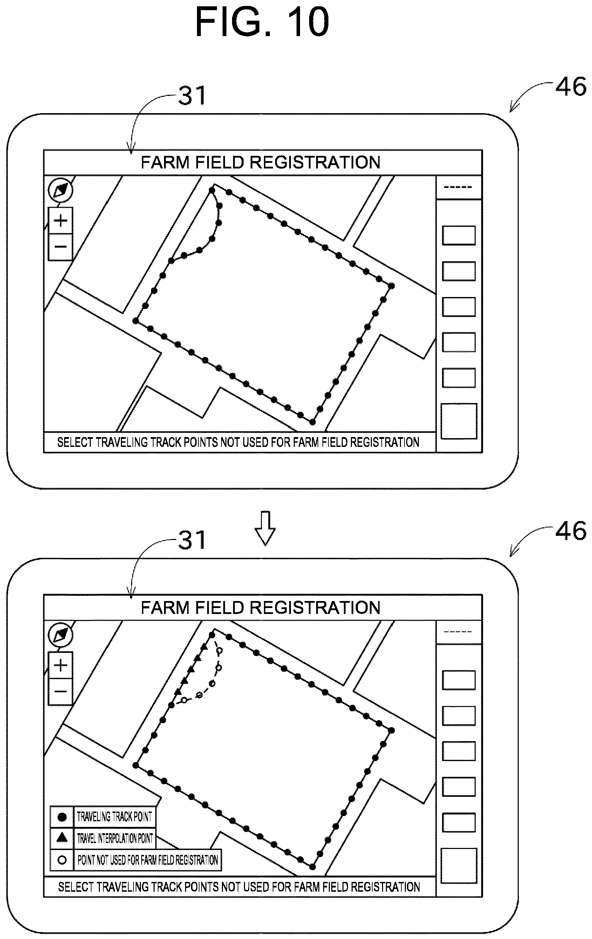

Referring to FIGS. 9 and 10 next, the second mode for the farm field registration is described. In the second mode, as described above, unnecessary positions of the tractor 1 (positions of the tractor 1 acquired during the avoidance travel) are excluded after the finish of the travel along the perimeter of the farm field so as to register the contour of the farm field. Consequently, in the second mode, processing related to the travel along the perimeter of the farm field is the same as the conventional processing. In other words, after starting the farm field registration by the perimetric travel (step S201), the area registration unit 34 continues to store the position of the tractor 1 (step S202) and terminates storing of the position of the tractor 1 if determining that the perimetric travel for the farm field registration has finished (step S203).

After the perimetric travel for the farm field registration, the area registration unit 34 creates the traveling track points as in the first mode and the display control unit 33 displays the traveling track points on the display device 31 of the wireless communications terminal 46 (step S204). A screen displayed on the display device 31 at this time is illustrated in an upper portion of FIG. 10. As illustrated in FIG. 10, the traveling track points as displayed on the screen include traveling track points that were acquired during the avoidance travel.

Next, the determination unit 36 determines whether a traveling track includes a curved line meeting a specified condition (step S205). If the avoidance travel is to be made, the tractor 1 needs to turn around, so that the traveling track includes a curved line. If the traveling track includes a curved line, therefore, it is conceivable that the avoidance travel may have been made. The tractor 1, however, also turns around when taking a bent in a corner of the farm field, so that it is preferable that the avoidance travel and the turn in a corner are distinguished from each other as far as possible. The distinction between the avoidance travel and the turn in a corner does not need to be made with an accuracy of 100% because this determination is only performed on purpose to notify the operator that some traveling track points may have to be excluded. The above-mentioned "specified condition" is a condition for distinguishing a curved line in the traveling track that is produced during the turn in a corner of the farm field and a curved line in the traveling track that is produced during the avoidance travel from each other. During the turn in a corner, the traveling track is likely to have such a curvilinear form as abruptly changing the direction because corners of the farm field are basically right-angled and the operator travels as close as possible to the perimeter of the farm field. During the avoidance travel, on the other hand, the traveling track is likely to have such a curvilinear form as gradually changing the direction because it is less possible that an obstacle such as mud is rectilinear in contour. Consequently, the specified condition is based on the magnitude of a curvature of the traveling track, for instance. Taking into account that the farm field is basically rectangular in shape, it is highly possible that positions of the four corners of the farm field are specified based on the traveling track as a whole. Therefore, it may be determined whether the traveling track includes a curved line in a place other than the four corners of the farm field.

If the determination unit 36 determines that the traveling track includes the curved line meeting the specified condition, the notification unit 37 gives a command to the display control unit 33 so as to display a cautionary message on the display device 31 of the wireless communications terminal 46, for instance (step S206). The cautionary message is adequately a message notifying the operator that adjustment of the traveling track points is required.

Next, the area registration unit 34 accepts selection of traveling track points not used for the farm field registration irrespective of the result of determination in step S205 (step S207). As an example, the operator touches the traveling track points, which are displayed on the display device 31 of the wireless communications terminal 46, so as to select the traveling track points not used for the farm field registration. The area registration unit 34 excludes the traveling track points as selected by the operator without using for the farm field registration (step S207).

Then, the area registration unit 34 creates the travel interpolation points based on the traveling track points, which were not excluded, and the display control unit 33 displays the created travel interpolation points on the display device 31 of the wireless communications terminal 46 (step S208). In a lower portion of FIG. 10, an example of the display of the traveling track points and the travel interpolation points is illustrated. In the present embodiment, the traveling track points as excluded (points not used for the farm field registration) are also displayed, while such display may be omitted.

Next, the area registration unit 34 specifies a corner of the farm field (step S209) and registers the contour of the farm field, the traveling track points, and the travel interpolation points (step S210), as in the first mode.

As described above, the area registration system 200 of the present embodiment causes the tractor 1 to travel along the perimeter of an area (a farm field in the present embodiment) so as to register the contour of the area. The area registration system 200 includes the position information acquisition unit 49, the avoidance travel setting unit 35, and the area registration unit 34. The position information acquisition unit 49 acquires the position of the tractor 1. The avoidance travel setting unit 35 sets, during the travel of the tractor 1, start and finish of an avoidance travel for detouring around an obstacle during the travel of the tractor 1 along the perimeter of the area. The area registration unit 34 registers the contour of the area based on the positions of the tractor 1, which are acquired by the position information acquisition unit 49 during the travel of the tractor 1 along the perimeter of the area and specified by excluding the positions of the tractor 1 as acquired during the period from the start to the finish of the avoidance travel.

According to the configuration as above, it is possible to register an accurate contour of the area even if an obstacle is present on the perimeter of the area and the tractor 1 is caused to travel avoiding the obstacle. Since it can be settled during traveling that the avoidance travel is in progress, selection of unnecessary positions after the finish of traveling is omitted or simplified.

The area registration unit 34 of the area registration system 200 of the present embodiment registers not only the contour of the area but also traveling track points of the tractor 1. The area registration unit 34 registers travel interpolation points interpolating the traveling track points on a line segment joining the position at the start and the position at the finish of the avoidance travel.

Such configuration makes it possible to create the traveling track points (travel interpolation points) in a place where the avoidance travel was made, as in other places, so that a process using a traveling track is able to be performed.

The area registration unit 34 of the area registration system 200 of the present embodiment creates at least two straight lines based on the traveling track points and the travel interpolation points and registers an intersection of the created two straight lines as a corner of the area.

Such configuration makes it possible to use the travel interpolation points to appropriately find a corner of the area.

In the area registration system 200 of the present embodiment, the avoidance travel setting unit 35 sets positions of the tractor 1 during the avoidance travel for detouring around an obstacle among positions of the tractor 1 acquired by the position information acquisition unit 49, based on an instruction from the operator after the travel of the tractor 1 along the perimeter of the area. The area registration unit 34 registers the contour of the area based on the positions of the tractor 1, which are acquired by the position information acquisition unit 49 during the travel of the tractor 1 along the perimeter of the area and specified by excluding the positions of the tractor 1 as acquired during the period from the start to the finish of the avoidance travel.

Such configuration makes it possible to register an accurate contour of the area even if an obstacle is present on the perimeter of the area and is avoided. The positions during the avoidance travel are set after the perimetric travel, so that the operator is able to concentrate on the driving of the tractor 1 during the perimetric travel.

The area registration system 200 of the present embodiment includes the determination unit 36 and the notification unit 37. The determination unit 36 determines whether a traveling track of the tractor 1 obtained from the travel of the tractor 1 along the perimeter of the area is rectilinear or curvilinear. The notification unit 37 gives notification that a curved line is included in the traveling track, if such occasion arises.

If the avoidance travel is made, the traveling track is often curvilinear. Consequently, the notification that a curved line is included in the traveling track prevents the operator from forgetting to set the avoidance travel.

A preferred embodiment of the present invention has been described above, while the above configurations can be modified as described below, for instance.

In the above embodiment, the position of the tractor 1 is not stored during the avoidance travel in the first mode. Instead, the position of the tractor 1 may be stored even during the avoidance travel, adding information that the avoidance travel is in progress. In that case, the position of the tractor 1, to which the information that the avoidance travel is in progress has been added, is not used for a process for specifying the contour of the farm field. In this regard, the position of the tractor 1, to which the information that the avoidance travel is in progress has been added, may be displayed on the display device 31 of the wireless communications terminal 46 in distinction from other traveling track points.

The flowcharts in the above embodiment are merely examples, and the processes may partially be omitted or partially be changed in contents or a new process may be added. For instance, the process for creating the travel interpolation points may be omitted in the first mode and the second mode. The processes performed by the determination unit 36 and the notification unit 37 may be omitted in the second mode. At least part of the processes illustrated in the flowcharts may be performed by a device (the controller 4, for instance) on the tractor 1. The information to be displayed is not limitedly displayed on the wireless communications terminal 46 but may be displayed on the monitoring device 14 or another portable terminal.

As to the above embodiment, the flow of processing only following either the first mode or the second mode has been described, while the process in step S207 (selection of a traveling track not used for the farm field registration) or the like in the second mode may be performed after the first mode was followed and the perimetric travel for the farm field registration finished. In that case, it is possible to retrospectively address even to the case, where the operator forgot to operate the pause button 91 during the travel of the tractor 1.

### DESCRIPTION OF REFERENCE NUMERALS

- 1: tractor (working vehicle)
- 34: area registration unit
- 35: avoidance travel setting unit
- 49: position information acquisition unit
- 100: autonomous travel system
- 200: area registration system

## Claims

1. An area registration system (200) adapted to cause a working vehicle (1) to travel along a perimeter of an area and registers a contour of the area, the system comprising:
a position information acquisition unit (49) that acquires a position of the working vehicle (1);
an avoidance travel setting unit (35) adapted to set during travel of the working vehicle (1), start and finish of an avoidance travel for detouring around an obstacle during travel of the working vehicle (1) along the perimeter of the area; and
an area registration unit (34) adapted to register the contour of the area based on positions of the working vehicle (1) acquired by the position information acquisition unit (49) during the travel of the working vehicle (1) along the perimeter of the area and **characterized in that** the area registration unit (34) is configured to register the contour of the area specified by excluding positions of the working vehicle (1) acquired during a period from the start to the finish of the avoidance travel.

2. The area registration system (200) according to claim 1, wherein
the area registration unit (34) registers not only the contour of the area but also traveling track points of the working vehicle (1), and
the area registration unit (34) registers travel interpolation points interpolating the traveling track points on a line segment joining a position at the start and a position at the finish of the avoidance travel.

3. The area registration system (200) according to claim 2, wherein
the area registration unit (34) creates at least two straight lines based on the traveling track points and the travel interpolation points and registers an intersection of the two straight lines as a corner of the area.

4. An area registration system (200) adapted to cause a working vehicle (1) to travel along a perimeter of an area and registers a contour of the area, the system comprising:
a position information acquisition unit (49) adapted to acquire a position of the working vehicle (1);
an avoidance travel setting unit (35) adapted to set positions of the working vehicle (1) during an avoidance travel for detouring around an obstacle among positions of the working vehicle (1) acquired by the position information acquisition unit (49), based on an instruction from an operator after travel of the working vehicle (1) along the perimeter of the area; and
an area registration unit (34) adapted to register the contour of the area based on positions of the working vehicle (1) acquired by the position information acquisition unit (49) during the travel of the working vehicle (1) along the perimeter of the area and **characterized in that** the area registration unit (34) is configured to register the contour of the area specified by excluding positions of the working vehicle (1) acquired during a period from start to finish of the avoidance travel.

5. The area registration system (200) according to claim 4, comprising:
a determination unit (36) that determines whether a traveling track of the working vehicle (1) obtained from the travel of the working vehicle (1) along the perimeter of the area is rectilinear or curvilinear; and
a notification unit (37) that gives notification that a curved line is included in the traveling track, if such occasion arises.

## Patentansprüche

1. Bereichsregistrierungssystem (200), das dafür ausgelegt ist, ein Arbeitsfahrzeug (1) zu veranlassen,
sich entlang eines Umfangs eines Bereichs zu bewegen, und eine Kontur des Bereichs registriert, wobei das System umfasst:
eine Positionsinformationserfassungseinheit (49), die eine Position des Arbeitsfahrzeugs (1) erfasst;
eine Ausweichfahrt-Einstelleinheit (35), die dafür ausgelegt ist,
während der Fahrt des Arbeitsfahrzeugs (1) einen Beginn und ein Ende einer Ausweichfahrt zum Umfahren eines Hindernisses während der Fahrt des Arbeitsfahrzeugs (1) entlang des Umfangs des Bereichs einzustellen; und
eine Bereichsregistrierungseinheit (34), die dafür ausgelegt ist, die Kontur des Bereichs zu registrieren,
auf der Grundlage von Positionen des Arbeitsfahrzeugs (1), die von der Positionsinformationserfassungseinheit (49) während der Fahrt des Arbeitsfahrzeugs (1) entlang des Umfangs des Bereichs erfasst werden, und **dadurch gekennzeichnet, dass** die Bereichsregistrierungseinheit (34) konfiguriert ist, die Kontur des Bereichs zu registrieren, die spezifiziert ist durch Ausschließen von Positionen des Arbeitsfahrzeugs (1), die während eines Zeitraums vom Beginn bis zum Ende der Ausweichfahrt erfasst werden.

2. Bereichsregistrierungssystem (200) nach Anspruch 1, wobei
die Bereichsregistrierungseinheit (34) nicht nur die Kontur des Bereichs, sondern auch Fahrspurpunkte des Arbeitsfahrzeugs (1) registriert, und
die Bereichsregistrierungseinheit (34) Fahrinterpolationspunkte registriert, die die Fahrspurpunkte auf einem Liniensegment interpolieren, das eine Position am Beginn und eine Position am Ende der Ausweichfahrt verbindet.

3. Bereichsregistrierungssystem (200) nach Anspruch 2, wobei
die Bereichsregistrierungseinheit (34) mindestens zwei Geraden auf der Grundlage der Fahrspurpunkte und der Fahrinterpolationspunkte erstellt und einen Schnittpunkt der zwei Geraden als eine Ecke des Bereichs registriert.

4. Bereichsregistrierungssystem (200), das dafür ausgelegt ist, ein Arbeitsfahrzeug (1) zu veranlassen,
sich entlang eines Umfangs eines Bereichs zu bewegen, und eine Kontur des Bereichs registriert, wobei das System umfasst:
eine Positionsinformationserfassungseinheit (49), die dafür ausgelegt ist, eine Position des Arbeitsfahrzeugs (1) zu erfassen;
eine Ausweichfahrt-Einstelleinheit (35), die dafür ausgelegt ist, Positionen des Arbeitsfahrzeugs (1) während einer Ausweichfahrt zum Umfahren eines Hindernisses unter den Positionen des Arbeitsfahrzeugs (1), die von der Positionsinformationserfassungseinheit (49) erfasst werden, auf der Grundlage einer Anweisung eines Bedieners nach der Fahrt des Arbeitsfahrzeugs (1) entlang des Umfangs des Bereichs einzustellen; und
eine Bereichsregistrierungseinheit (34), die dafür ausgelegt ist, die Kontur des Bereichs zu registrieren,
auf der Grundlage von Positionen des Arbeitsfahrzeugs (1), die von der Positionsinformationserfassungseinheit (49) während der Fahrt des Arbeitsfahrzeugs (1) entlang des Umfangs des Bereichs erfasst werden, und **dadurch gekennzeichnet, dass** die Bereichsregistrierungseinheit (34) konfiguriert ist, die Kontur des Bereichs zu registrieren, die spezifiziert ist durch Ausschließen von Positionen des Arbeitsfahrzeugs (1), die während eines Zeitraums vom Beginn bis zum Ende der Ausweichfahrt erfasst werden.

5. Bereichsregistrierungssystem (200) nach Anspruch 4, umfassend:
eine Bestimmungseinheit (36), die bestimmt, ob eine Fahrspur des Arbeitsfahrzeugs (1), die aus der Fahrt des Arbeitsfahrzeugs (1) entlang des Umfangs des Bereichs gewonnen wird, geradlinig oder kurvenförmig ist; und
eine Benachrichtigungseinheit (37), die eine Benachrichtigung gibt, dass eine gekrümmte Linie in der Fahrspur enthalten ist, falls eine solche Gelegenheit eintritt.

## Revendications

1. Système d'enregistrement de zone (200) adapté pour amener
un véhicule de travail (1) à
se déplacer le long d'un périmètre d'une zone et enregistre un contour de la zone, le système comprenant :
une unité d'acquisition d'informations de position (49) qui acquiert une position du véhicule de travail (1) ;
une unité de réglage de déplacement d'évitement (35) adaptée pour régler,
pendant le déplacement du véhicule de travail (1), un début et une fin d'un déplacement d'évitement pour contourner un obstacle pendant le déplacement du véhicule de travail (1) le long du périmètre de la zone ; et
une unité d'enregistrement de zone (34) adaptée pour enregistrer
le contour de la zone
sur la base de positions du véhicule de travail (1) acquises par l'unité d'acquisition d'informations de position (49) pendant le déplacement du véhicule de travail (1) le long du périmètre de la zone et **caractérisé en ce que** l'unité d'enregistrement de zone (34) est configurée pour enregistrer le contour de la zone spécifié en excluant des positions du véhicule de travail (1) acquises pendant une période allant du début à la fin du déplacement d'évitement.

2. Système d'enregistrement de zone (200) selon la revendication 1, dans lequel
l'unité d'enregistrement de zone (34) enregistre non seulement le contour de la zone mais également des points de trajectoire de déplacement du véhicule de travail (1), et l'unité d'enregistrement de zone (34) enregistre des points d'interpolation de déplacement interpolant les points de trajectoire de déplacement sur un segment de droite joignant une position au début et une position à la fin du déplacement d'évitement.

3. Système d'enregistrement de zone (200) selon la revendication 2, dans lequel
l'unité d'enregistrement de zone (34) crée au moins deux droites sur la base des points de trajectoire de déplacement et des points d'interpolation de déplacement et enregistre une intersection des deux droites en tant que coin de la zone.

4. Système d'enregistrement de zone (200) adapté pour amener
un véhicule de travail (1) à
se déplacer le long d'un périmètre d'une zone et enregistre un contour de la zone, le système comprenant :
une unité d'acquisition d'informations de position (49) adaptée pour acquérir une position du véhicule de travail (1) ;
une unité de réglage de déplacement d'évitement (35) adaptée pour régler des positions du véhicule de travail (1) pendant un déplacement d'évitement pour contourner un obstacle parmi des positions du véhicule de travail (1) acquises par l'unité d'acquisition d'informations de position (49), sur la base d'une instruction d'un opérateur après le déplacement du véhicule de travail (1) le long du périmètre de la zone ; et
une unité d'enregistrement de zone (34) adaptée pour enregistrer
le contour de la zone
sur la base de positions du véhicule de travail (1) acquises par l'unité d'acquisition d'informations de position (49) pendant le déplacement du véhicule de travail (1) le long du périmètre de la zone et **caractérisé en ce que** l'unité d'enregistrement de zone (34) est configurée pour enregistrer le contour de la zone spécifié en excluant des positions du véhicule de travail (1) acquises pendant une période allant du début à la fin du déplacement d'évitement.

5. Système d'enregistrement de zone (200) selon la revendication 4, comprenant :
une unité de détermination (36) qui détermine si une trajectoire de déplacement du véhicule de travail (1) obtenue à partir du déplacement du véhicule de travail (1) le long du périmètre de la zone est rectiligne ou curviligne ; et
une unité de notification (37) qui donne une notification qu'une ligne courbe est incluse dans la trajectoire de déplacement, si une telle occasion se présente.
